(19) Europäisches Patentamt
European Patent Office
Office européen des brevets

(11) **EP 4 560 417 A1**

(12) **EUROPEAN PATENT APPLICATION**

(43) Date of publication:
**28.05.2025 Bulletin 2025/22**

(21) Application number: **23212024.6**

(22) Date of filing: **24.11.2023**

(51) International Patent Classification (IPC):
**G05B 19/05** (2006.01)  **G05B 23/02** (2006.01)

(52) Cooperative Patent Classification (CPC):
**G05B 19/054; G05B 23/0256;** G05B 19/058

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **Novenco Building & Industry A/S**
**4700 Næstved (DK)**

(72) Inventors:
• **KEßLER, Jan**
**61184 Karben (DE)**
• **HONEYSETT, Alan**
**Bowerhill, SN12 6YY (GB)**
• **VAN DER WIELEN, Toine**
**2661 CS Bergschenhoek (NL)**

(74) Representative: **Guardian**
**IP Consulting I/S**
**Diplomvej, Building 381**
**2800 Kgs. Lyngby (DK)**

(54) **PROGRAMMABLE LOGIC CONTROLLER SYSTEM WITH LINE MONITORING**

(57)    The present disclosure relates to programmable logic controller systems that include line monitoring systems for detection of PLC line integrity.

*FIG. 1*

EP 4 560 417 A1

**Description**

The present disclosure relates to programmable logic controller systems that include line monitoring systems for detection of PLC line integrity.

BACKGROUND OF THE INVENTION

Programmable logic controller systems are well-known in the art for controlling the operation of various types of load devices or machines such as ventilators, motors, actuators etc. Programmable logic controller systems are often installed in production lines of factories, office buildings etc.

Programmable logic controller systems are built around programmable logic controllers (PLCs) that receive multiple control signals and/or generate multiple control signals on respective input channels and output channels of the PLC in accordance with instructions delivered by a suitable computing device. The PLC control signals are connected to the load devices through respective electric lines or cables. However, if the integrity of one or more of the lines is compromised the corresponding PLC input channel may not receive correct signals from an input device and/or the corresponding load device may be left without appropriate control from the PLC. This lack of appropriate control by the PLC can lead to numerous problems for example interruption of an industrial manufacturing line. The lack of appropriate control from the PLC may lead to safety critical situations for example when the system comprises one or more smoke ventilation devices.

There is accordingly a need to monitor the integrity of the lines of programmable logic controller systems during normal operation for example by detecting fault states of the lines like open lines and short-circuited lines. That is in contrast to healthy lines that have appropriate electric connection between the PLC input channels and/or output channels and the input device and/or load device in question. Line monitoring systems in accordance with the present invention may be configured to monitor the respective functional states of the plurality of individual lines in such a manner that compliance with relevant standards and regulations is achieved, in particular ISO 21927-9 compliance including sections 5.1.5.1.3 and 5.1.5.1.4.

SUMMARY OF INVENTION

A first aspect of the invention relates to a programmable logic controller system comprising:

- a programmable logic controller (PLC) configured to generate a plurality of control signals on respective output channels of the PLC and/or receive a plurality of control signals on respective input channels of the PLC,
- a plurality of individual lines (N >1) electrically connected between the output channels of the PLC and respective ones of a plurality of load devices and/or a plurality of individual lines (N >1) electrically connected between the input channels of the PLC and respective ones of a plurality of input devices.

The programmable logic controller system additionally comprises a line monitoring system configured to detect respective functional states of the plurality of individual lines where the line monitoring system comprises:

- a test signal injection and extraction circuit for each line and arranged proximately to the corresponding output channel or input channel of the PLC,
- a line termination circuit for each line and arranged distally from the corresponding output channel or input channel of the PLC. The line monitoring system further comprises:

    - a processor configured to:

        - generate a test signal,
        - sequentially inject or apply the test signal on the plurality of individual lines,
        - derive corresponding evaluation signals ($V_I$) from respective test signal responses of the plurality of individual lines,
        - determine a functional state of each line based on the corresponding evaluation signal ($V_I$) of the line.

The skilled person will understand that the functional state of each line at least comprises:

- an open line,
- a short-circuited line; and
- a connected line.

The open line and short-circuited line represents fault states of the line in question while the connected line represents a healthy lines with appropriate electric connection between the PLC input channel or output channel and the input device or load device of the line in question. The processor may be configured to provide a system operator with an indication of the functional state of each line during normal operation of the programmable logic controller system for example using at least one of visual symbols, audible sounds and tactile feedback. The indication of the functional state may be accessible remotely, e.g. on computer screen, via a suitable communication network.

A length of each line may lie between 0.1 m and 200 m for example between 10 m and 100 m as discussed in additional detail below with reference to the appended drawings.

Some embodiments of the programmable logic controller system may comprise:

- a test signal injection path connected between a signal output of the processor and the test signal injection and extraction circuit; and
- a test signal evaluation path connected between an input of the processor and the test signal injection and extraction circuit and configured to derive the respective test signal responses.

According to certain embodiments of the line monitoring system the test signal injection path and test signal evaluation path comprise a shared switch array, e.g. an analog switch or multiplexer, configured to:

- sequentially connect the test signal to the plurality of individual lines through the test signal injection and extraction circuit in accordance with a line select signal supplied by the processor. The line select signal may be applied as a digital signal or code to an input of the shared switch array. The shared switch array is preferably further configured to simultaneously connect the test signal evaluation path via the test signal injection and extraction circuit to the plurality of individual lines line in accordance with the line select signal. Hence, the application of the test signal on a particular line may be carried out simultaneously with the extraction of the corresponding test response signal of the line.

The test signal injection path may comprise a power measurement circuit configured to provide a test voltage for each line where the test voltage is representative of a test signal power on each line.

The processor is for each line configured to:

- routing the test voltage ($V_r$) to the test signal evaluation path via the shared switch array to produce a corresponding test voltage level ($V_p$),
- determine the functional state of each line based on the test voltage level ($V_p$) and the corresponding evaluation signal ($V_l$).

The processor may for example utilize a line score for each line by determining the line score, S, according to:

$$S = \frac{V_p - V_l}{V_p + V_l}$$

The processor may compare the computed line score, S, to one or more predetermined score limits for determination of the functional state of the line as discussed in additional detail below with reference to the appended drawings.

The processor may be configured to compute predetermined score limits during calibration phases of the line monitoring system. The processor may be configured repeatedly calibrate the line monitoring system by:

- adjusting, e.g. ramping up, the level of the test signal on each line until a predetermined power on the line is reached,
- storing the corresponding test voltage level of the test signal as a calibration voltage in non-volatile memory og the processor,
- compute the one or more predetermined score limits based on the calibration voltage as discussed in additional detail below with reference to the appended drawings.

The frequency of the test signal is preferably at least 10 times higher, more preferably at least 50 times higher, than a maximum frequency of the control signal on each line. The maximum frequency of the control signal is typically below a few kHz such as below 1 kHz. The test signal frequency may depend on various electrical and/or physical characteristics of a particular system such a length of the lines. The test signal frequency may lie between 100 kHz and 200 kHz for some systems. The test signal may comprise a pulsed sine wave with a 100 kHz and 200 kHz and with a pulse duration between 1 ms and 20 ms such as about 3 ms.

The test signal injection path of the line monitoring system may comprise various circuits and components to process or condition an unconditioned digital test signal supplied by the processor on a suitable output port. The test signal injection path may for example comprises:

- a digital test signal generator, a D/A converter, an anti-aliasing lowpass filter and optionally a power amplifier and power measurement circuit.

The test signal evaluation path of the line monitoring system may comprise various circuits and components to process the test signal response of a line to derive the evaluation signal. The test signal evaluation path may for example comprise a bandpass filter, an envelope detector, a highpass filter and an A/D converter coupled in series to process the test signal response and supply the evaluation signal ($V_l$).

Some embodiments of the test signal injection and extraction circuit comprises on each line:

- a lowpass filter coupled between the output channel or input channel of the PLC and the line for suppressing the test signal at the PLC or supressing the test signal at the load device. The line termination circuit preferably comprises a lowpass filter connected between the line and the load device or connected between the input device and the line for suppressing the test signal at the load device or suppressing the test signal at the input device as discussed in additional detail below with reference to the appended drawings.

A second aspect of the invention relates to a method of determining respective functional states of a plurality of individual lines of a programmable logic controller (PLC) system. Said method comprising:

a) inject a test signal onto a first line of the plurality of individual lines (N) at a connection node of the first line, said connection node arranged proximately to a first input channel or first output channel of the PLC,
b) receive a corresponding test response signal by signal reflection from a line termination circuit arranged distally from the output channel or input channel of the first line,
c) process a corresponding test response signal in a test signal evaluation path to derive a first evaluation signal ($V_I$) of the first line,
d) determine a functional state of the first line based on the first evaluation signal ($V_I$) of the first line,
e) repeat steps a) to d) for each of the residual lines of the plurality of individual lines to determine their respective functional states.

The method may further comprise:
f) indicate the functional state of each line to an operator by at least one of visual symbols, audible sounds and tactile feedback.

The method may further comprise determine the functional state of each line based on the above-discussed test voltage level ($V_p$) in combination with the evaluation signal ($V_I$).

BRIEF DESCRIPTION OF THE DRAWINGS

Other and further aspects and features of the invention will be evident from reading the following detailed description of the embodiments.

The drawings illustrate the design and utility of embodiments of the programmable logic controller (PLC) system in which similar elements are referred to by common reference numerals. These drawings are not necessarily drawn to scale. In order to better appreciate how the above-recited and other advantages and objects are obtained, a more particular description of the embodiments will be rendered, which are illustrated in the accompanying drawings. These drawings depict only typical embodiments and are not therefore to be considered limiting of the scope of the appended patent claims.

FIG. 1 shows a block diagram of an exemplary programmable logic controller (PLC) system in accordance with embodiments of the invention,

FIG. 2 shows a block diagram of a test signal injection path and a test signal evaluation path of a line monitoring system of the exemplary PLC system,

FIG. 3 shows a shared test signal injection and extraction circuit and a line termination circuit of a line of the line monitoring system.

DETAILED DESCRIPTION OF THE DRAWINGS

The skilled person will understand that the accompanying drawings are schematic and simplified for clarity, and may in some instances merely show details which are essential to the understanding of the embodiments of the exemplary PLC system, while other details have been left out.

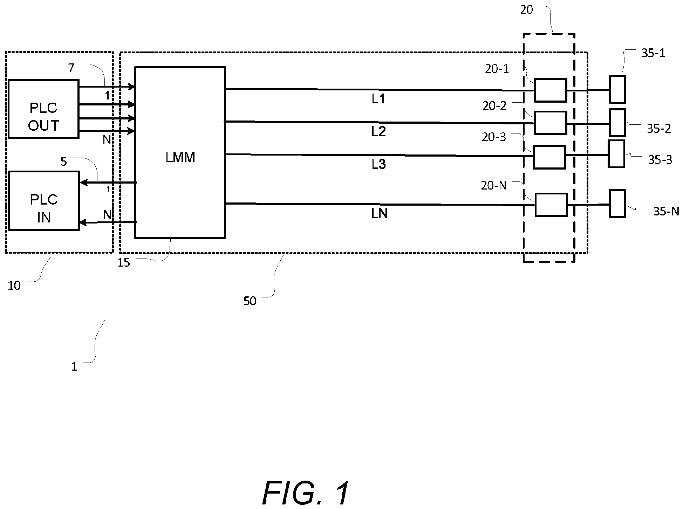

FIG. 1 shows a block diagram of an exemplary programmable logic controller (PLC) system 1 in accordance with embodiments of the invention. The PLC system 1 may be suitable for industrial environments, commercial or residential buildings depending on the type of input devices (not shown) or type of load devices (35-1, 35-2, 35-N) etc. The PLC system 1 comprises a programmable logic controller (PLC) (10) configured to receive or generate a plurality of control signals on respective input channels (5) (1 - N) of the PLC 10 or output channels (7) (1 - N) of the PLC 10. The PLC system (1) comprises a plurality of individual lines or wires (L1, L2... LN) electrically connected between the output channels of the PLC 10 and respective ones of a plurality of the load devices (35-1, 35-2, 35-N) and/or electrically connected between a plurality of output channels of the PLC 10 and respective ones of the plurality of the input devices (not shown) such as initiation devices, switches, ventilators, motors, actuators etc. Each line may have a length between 0.1 m and 200 m in typical installations. The length of the line being measured from a physical input or output connector of the PLC 10 to the physical termination of the connected load device or input device.

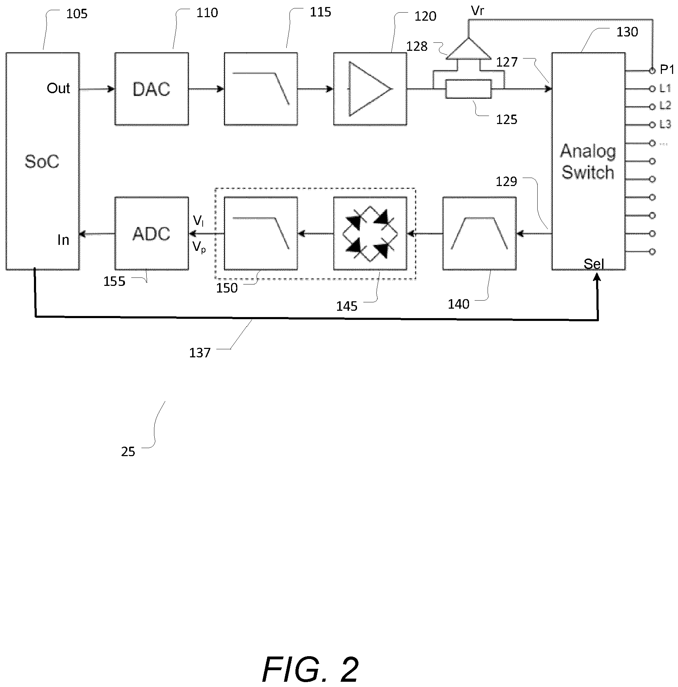

The PLC 10 is configured to generate respective control signals on the plurality (N) of individual lines or wires (L1, L2... LN) and/or receive and process respective control signal delivered by the input devices, in both instances in accordance with a PLC executable program for example executed on a processor (105 on FIG. 2) such as a software programmable microprocessor for example comprising a DSP. A nominal voltage of the control signals may be 24 VDC. The PLC system 1 may comply with relevant regulatory and/or technical standards such as ISO 21927-9, including section 5.1.5.1.3. The PLC system 1 comprises a line monitoring system 50 configured to detect respective functional states of the plurality of individual lines and detect and possibly indicate respective fault states and healthy states thereof.

For the sake of brevity the further description of the present PLC system 1 and its associated line monitoring system 50 is based on an embodiment that only comprises output channels connected to respective load devices. The skilled person will understand in view of the above system description that all disclosed features and functions of the line monitoring system 50 apply to the input channels as well. The monitor module 15 is arranged proximately to the output channels of the PLC 10 for example inside a cabinet or housing (not shown) of the PLC 10. The arrangement of the monitor module 15 inside a cabinet of the PLC 10 may be advantageous because such arrangement ensures appropriate monitoring of the entire free line segment. The monitor module 15 may alternatively be arranged outside the cabinet and for example less than 5 m or 0. 1m from the cabinet.

The monitor module 15 may for each line of the plurality of individual lines (L1, L2... LN) comprise a test signal injection and extraction circuit as disclosed in additional detail below. The line monitoring system 50 may further comprise a termination module 20 that comprises a plurality of respective line termination circuits (20-1, 20-2...20-N) of the plurality of individual lines (L1, L2... LN). The line termination circuits (20-1, 20-2...20-N) are preferably arranged distally from the respective input channels or output channels 1, N of the PLC 10 for example less than 5 m or less than 1 m from the termination point of the input device of the line in question or the load device of the line in question. Each of the line termination circuits (20-1, 20-2...20-N) is preferably arranged inside a cabinet of the load device in question or inside a cabinet of the input device in question. That arrangement ensures that the line monitoring system 50 monitors the entire free line segment.

The processor 105 (FIG. 2) of the line monitoring system 50 is configured to sequentially, for example in a particular order going from 1 to N, inject the test signal on the plurality of individual lines during normal operation of the PLC system 1. The processor 105 is configured to sequentially determine corresponding evaluation signals derived from respective test signal responses of the plurality of individual lines. The processor 105 is preferably configured to determine the functional state of each line based on its evaluation signal. The skilled person will appreciate that the line monitoring system 50 preferably is configured to continuously monitor the respective functional states of the plurality of individual lines during normal operation of the system 1 for example by repeatedly carrying out the above-mentioned test signal injection and evaluation process after each full round of line testing.

The detection of the respective functional states of the plurality of individual lines may be carried out by the line monitoring system 50 during normal operation of the PLC system 1. The line monitoring system 50 is preferably designed such that the detection of the respective functional states of the plurality of individual lines is carried out without compromising integrity of the respective control signals to, or from, the plurality of load devices during normal system operation. This effect may be achieved by selecting a suitable frequency separation between a maximum frequency of the control signals, e.g. 1 kHz, and a frequency of the test signal that is superimposed on, or added to, the control signals as discussed in further detail below. The test signal may for example have a frequency between 125 kHz and 250 kHz such as about 145 kHz. The test signal may be a sine wave that may be applied to the line as pulse or burst during testing thereof. A pulse duration or length may lie between 1 ms and 5 ms such as about 3 ms. A single test signal pulse may be applied on each line, and its corresponding test response signal evaluated, in connection with the determination of the functional state of the line in question.

The line monitoring system 50 is preferably designed to at least detect the following functional states of each line:

- an open line,
- a short-circuited line; and
- a connected line.

The skilled person will appreciate that the open, i.e. interrupted, line and the short-circuited line are fault states of the line in question of the PLC system 1 while the connected state represents a healthy line.

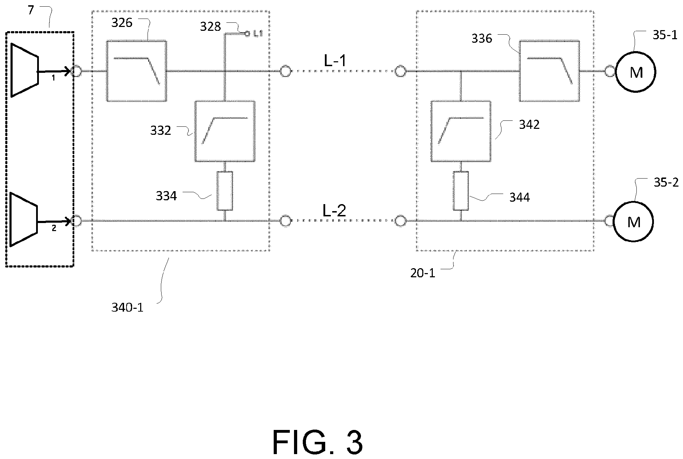

FIG. 2 shows block diagrams of a test signal injection path and test signal evaluation path of the line monitoring system 50. The test signal injection path and the test signal evaluation path in brief the "test circuit" 25. The test circuit 25 comprises the previously discussed processor 105 which preferably is configured to generate an unconditioned digital test signal for conditioning in the test signal injection path. The test signal injection path is connected between a digital output signal (Out) of the processor 105 and a test signal injection and extraction circuit (FIG. 3) of the line under test as discussed in additional detail below. The test signal evaluation path is connected between an input (in) of the processor 105 and the test signal injection and extraction circuit. The test signal evaluation path is configured to derive corresponding evaluation signals $(V_I)$ from test signal responses of the plurality of individual lines. The unconditioned digital test signal is converted to analog format by a D/A converter 110 and thereafter filtered by a lowpass filter 115 to supress unwanted high-frequency aliasing components of the analogue output. The skilled person will understand that a cut-off frequency of the lowpass filter 115 is preferably placed above the frequency of the test signal. The skilled person will understand that the D/A converter 110 and/or the lowpass filter 115 may be integrally formed with the processor 105 for example via integration on common semiconductor substrate.

The analogue test signal at the output of the lowpass filter 115 is amplified by a power amplifier 120 which delivers an amplified/buffered analogue test signal which is applied to a reference resistor or resistance 125 coupled in series with the output of the power amplifier 120 and a switch input 127 of a switch array 130, such as an analog switch. The switch array 130 may be shared by the test signal injection path and test signal evaluation path. The (conditioned) test signal is now available at the switch input 127 for routing to the currently selected line, e.g. L1, L2... LN, via the switch array 130. The processor 105 is preferably configured or programmed to measure or estimate the test signal power on the selected line. The test signal power may be derived or estimated in various ways for example using a power measurement circuit. The latter may involve measuring a suitable test voltage ($V_r$) such as a voltage drop across a reference resistor 125 of the power measurement circuit. The reference resistor 125 may be coupled into the test signal injection path for example in series with the power amplifier 120 as illustrated on FIG. 2. The power measurement circuit may additionally comprise an operational amplifier 128 having differential inputs coupled across the reference resistor 125 to generate the test voltage ($V_r$) at an output of the operational amplifier 128. The test voltage ($V_r$) is routed to an input P1 of the switch array.

The switch array 130 comprises a control or select input, Sel, that is electrically connected to a suitable output port of the processor 105. The state of the switch array 130, and hence its routing of input signals, is controlled by the processor 105 by supplying a digital control signal 137 to the select input Sel of the switch array 130. The digital control signal 137 inter alia selects which line, e.g. L1, L2, LN that is routed to the output of test signal injection path through the switch array 130. The individual lines are preferably connectable to the test signal via respective connection nodes (328 on FIG. 3) coupled electrically to respective ones of the plurality of individual lines. Each of the connection nodes is a component of the corresponding test signal injection and extraction circuit as disclosed in additional detail below. The test voltage ($V_r$) that may be measured simultaneously with the injection of the test signal is also routed from the input P1 of the switch array 130 to its output 129 by an appropriate value of the select input Sel. The test voltage ($V_r$) is thereby applied to the input of the evaluation path and processed therein to produce the corresponding test voltage level ($V_p$).

The skilled person will thus understand that the state of the switch array 130, and hence its routing of input signals to its output 129, is controlled by the processor 105 by the digital control signal 137.

The test signal evaluation path may comprise a bandpass filter 140 connected to the output port 129 to filter the test response signal. The passband of the bandpass filter 140 may be relatively small such as less than 10 kHz. The bandpass filter 140 may have a center frequency that approximately is identical to the frequency of the test signal. The bandpass filtered test signal response at the output of the bandpass filter 140 is applied an envelope detector 145. An envelope of the test signal response at the output of the envelope detector 145 is applied to an input of a highpass filter 150. A corner frequency of the highpass filter may line between 5 kHz and 100 kHz such as about 50 kHz when test signal frequency is about 145 kHz. Hence, the evaluation signal ($V_l$) may be seen as a processed version of the test response signal where the high-frequency components, i.e. the test signal frequency e.g. 145 kHz, are suppressed or largely eliminated. Likewise, the test voltage level ($V_p$) may be seen as a processed version of the test voltage ($V_r$) wherein the high-frequency components, i.e. the test signal frequency e.g. 145 kHz, are suppressed or largely eliminated.

The input of the test signal evaluation path of the line monitoring system 50 may simultaneously with test signal injection receive a test signal response from the line under test at the output port or node 129 of the switch array 130. The corresponding output signal of the highpass filter 150 is either the evaluation signal ($V_l$) or the test voltage level ($V_p$) depending on the currently selected signal routing of the switch array 130. The evaluation signal ($V_l$) and the test voltage level ($V_p$) are converted into digital format by the previously discussed A/D converter (ADC) 155 and routed to a suitable input port, In, of the processor 105 and read by the latter. The A/D-converter 155 may be time-multiplexed to measure sequentially convert the test voltage level ($V_p$) and the corresponding evaluation signal ($V_l$). The skilled person will understand that the A/D converter 155 and/or the highpass filter 150 may be integrally formed with the processor 105 for example via integration on common semiconductor substrate.

The line monitoring system 50 preferably comprises a calibration process that comprises repeated execution of calibration phases of the system 50 to determine respective test voltage levels of the plurality of individual lines. The calibration phase of the line monitoring system 50 may be carried out after each full round of the sequential test signal injection and test signal response measurements of the plurality of lines. The skilled person will however understand that the calibration phase in some embodiments is carried out less frequently for example after every two full rounds or five full rounds of line monitoring etc. Each calibration phase may comprise ramping up the power of the test signal on each line until a calibration voltage of that line is reached. The processor 105 reads the calibration voltage and the corresponding evaluation signal ($V_l$) of the line under calibration and stores the respective values for each line of the plurality of individual lines for example storing in volatile or persistent memory of the processor 105. The processor 105 preferably proceeds during the calibration phase to compute or determine respective reference line scores, $S_R$, of the plurality of individual lines where the respective reference line scores $S_R$ are derived from the stored the calibration voltages and their corresponding evaluation signals. The respective reference line scores $S_R$ are subsequently stored by the processor 105 in the volatile or persistent memory. Suitable reference line scores $S_R$ may for example be experimentally determined by the above-mentioned calibration processes carried out on a number of representative installations of the PLC system 1 and associated line monitoring system 50.

The respective reference line scores $S_R$ are utilized during normal operation of the line monitoring system 50 by the processor 105 for comparison with corresponding line scores, S, computed during on-line monitoring, i.e. monitoring during normal operation of the system.

The processor 105 may for each line be configured to determine the functional state of the line based on the test voltage level ($V_p$) and the corresponding evaluation signal ($V_l$) of the line in question. This is carried out during normal operation of the PLC system 1 and may be achieved in several ways such as by a system embodiment where the processor for each line is configured to determine a line score, S, according to:

$$S = \frac{V_p - V_l}{V_p + V_l}$$

The processor 105 is configured to compare the line score, S, to one or more predetermined score limits for example by determine the functional state of each line by comparing the corresponding line score S computed during normal operation of the system to the following threshold values of the corresponding reference line score $S_R$:

$$-\infty < S \le 0.11 \rightarrow open$$

$$0.11 < S < 0.265 \rightarrow connected$$

$$0.265 \le S < \infty \rightarrow short\ circuit$$

The skilled person will appreciate that the determined line score S of each line is indicative of its functional state because an open line or short-circuited line will lead to off-limits or erroneous line scores because of erroneous test signal power, i.e. line scores below 0.11 and above 0.265 in the present exemplary embodiment, on the line in question.

The line monitoring system 50 may optionally issue an alarm, e.g. a visual, tactile or sound alarm, to a system operator in case of detection of a fault state of one or more of the lines.

FIG. 3 shows a schematic drawing of the test signal injection and extraction circuit 340-1 of a single line (L1) of the monitor module 15 of the line monitoring system 50. A corresponding test signal injection and extraction circuit of the neighbouring line L2 is merely schematically indicated on the drawing for simplicity. Each of the residual lines preferably comprises an identical test signal injection and extraction circuit. The test signal injection and extraction circuit 340-1 is preferably arranged proximately to the output channel of the PLC of the line in question as previously discussed. Each line of the line monitoring system 50 further comprises the line termination circuit e.g. 20-1 coupled to the distal end of the line in question e.g. L1. The test signal injection and extraction circuit 340-1 is configured to inject the test signal, as supplied by the test signal injection path, on the line L1 using the coupling node 328 that is electrically connected to line L1. Therefore, the signal on line L1 during normal operation of the system 50 is a composite signal that comprises the control signal of line L1 and the test signal. The frequency of the test signal is preferably at least 10 times higher than the maximum frequency of the control signals for example at least 20 times higher or 50 times higher to provide a beneficial frequency separation between signals.

During test signal application on the line L1, the coupling node 328 of the test signal injection and extraction circuit 340-1 is additionally coupled to the input of the previously discussed test signal evaluation path through the switch array 130. Therefore, the test response signal may be evaluated by the processor 105 substantially simultaneously to the injection of the test signal by the processor 105. The test signal injection and extraction circuit of each line comprises a first line impedance circuit connected between the line e.g. L1 and the neighbouring line L2. The line termination circuit of each line comprises a second line impedance circuit connected between the line e.g. L1 and the neighbouring line e.g. L2. The first line impedance circuit may comprise a highpass filter 332 in series with a line impedance resistor 334. The second line impedance circuit may in a corresponding manner comprise a highpass filter 342 in series with a line impedance resistor 344. The characteristics of the highpass filters 332, 334 may be substantially identical and the line impedance resistors 334, 344 may be substantially identical to provide substantially identical line termination impedances at the proximate end and distal end of the line.

Some embodiments of the test signal injection and extraction circuits may comprise a first lowpass filter 326 coupled between the output channel (1) of the PLC 5 and the line L1 etc. for suppressing the test signal at the output channel of the PLC 5. The line termination circuit 20-1 of the line L1 may comprise a second lowpass filter 336 connected between the line L1 and an input of the load device 35-1 for suppressing the test signal at the load device 35-1. The skilled person will understand that a cut-off frequency of the second lowpass filters 336 may lie at or above the maximum frequency of the control signal (e.g. 1 kHz) and below the frequency of the test signal to provide the desired attenuation or suppression of the test signal at the load device 35-1. The skilled person will understand that this choice of cut-off frequency of the second lowpass filters 336 may be beneficial to avoid interference between the control signal and test signal in the load device. The cut-off frequency of the first lowpass filter 326 may be largely identical to the cut-off frequency of the second lowpass filter 336.

**Claims**

**1.** A programmable logic controller system (1) comprising:

- a programmable logic controller (PLC) configured to generate a plurality of control signals on respective output channels of the PLC and/or receive a plurality of control signals on respective input channels of the PLC,
- a plurality of individual lines (N >1) electrically connected between the output channels of the PLC and respective ones of a plurality of load devices and/or
- a plurality of individual lines (N >1) electrically connected between the input channels of the PLC and respective ones of a plurality of input devices; and
- a line monitoring system configured to detect respective functional states of the plurality of individual lines and comprising:
- a test signal injection and extraction circuit for each line and arranged proximately to the corresponding output channel or input channel of the PLC,
- a line termination circuit for each line and arranged distally from the corresponding output channel or input channel of the PLC;

wherein said line monitoring system further comprises:

- a processor configured to:

- generate a test signal,
- sequentially inject the test signal on the plurality of individual lines,
- derive corresponding evaluation signals ($V_l$) from respective test signal responses of the plurality of individual lines,
- determine a functional state of each line based on the corresponding evaluation signal ($V_l$) of the line.

2. A programmable logic controller system (1) according to claim 1, comprising:

- a test signal injection path connected between a signal output of the processor and the test signal injection and extraction circuit; and
- a test signal evaluation path connected between an input of the processor and the test signal injection and extraction circuit and configured to derive the corresponding evaluation signals ($V_l$).

3. A programmable logic controller system (1) according to claim 2, wherein the test signal injection path and test signal evaluation path comprise a shared switch array, e.g. an analog switch, configured to:

- sequentially connect the test signal to the plurality of individual lines through the test signal injection and extraction circuit in accordance with a line select signal supplied by the processor; and
- sequentially connect the test signal evaluation path via the test signal injection and extraction circuit to the plurality of individual lines line in accordance with the line select signal.

4. A programmable logic controller system (1) according to claim 3, wherein the test signal injection path comprises a power measurement circuit configured to provide a test voltage ($V_r$) for each line representative of a test signal power on the line.

5. A programmable logic controller system (1) according to claim 4, wherein power measurement circuit comprises reference resistor coupled into the test signal injection path.

6. A programmable logic controller system (1) according to claim 4 or 5, wherein the processor for each line is configured to:

- routing the test voltage ($V_r$) to the test signal evaluation path via the shared switch array to produce a corresponding test voltage level ($V_p$),
- determine the functional state of each line based on the test voltage level ($V_p$) and the corresponding evaluation signal ($V_l$).

7. A programmable logic controller system (1) according to claim 6, wherein the processor for each line is configured to:

- determine a line score, S, according to:

$$S = \frac{V_p - V_l}{V_p + V_l}$$

- compare the line score, S, to one or more predetermined score limits.

8. A programmable logic controller system (1) according to any of the preceding claims, wherein the test signal frequency lies between 100 kHz and 200 kHz, and the test signal is optionally pulsed with a pulse duration between 1 ms and 20 ms such as about 3 ms.

9. A programmable logic controller system (1) according to any of the preceding claims, wherein the functional state of each line at least comprises:

- an open line,
- a short-circuited line; and
- a connected line.

**10.** A programmable logic controller system (1) according to any of the preceding claims, wherein the processor is configured top:

- indicate the functional state of each line to a system operator by at least one of visual symbols, audible sounds and tactile feedback.

**11.** A programmable logic controller system (1) according to any of the preceding claims, wherein the test signal injection path of the line monitoring system comprises:

- a digital test signal generator, a D/A converter, an anti-aliasing lowpass filter and optionally a power amplifier and power measurement circuit; and

wherein the test signal evaluation path of the line monitoring system comprises:

- a bandpass filter, an envelope detector, a lowpass filter and an A/D converter coupled in series to process the test signal response and supply the evaluation signal ($V_l$).

**12.** A programmable logic controller system (1) according to any of the preceding claims, wherein the test signal injection and extraction circuit of each line comprises:

- a lowpass filter coupled between the output channel or input channel of the PLC and the line for suppressing the test signal at the PLC or at the load device; and
- the line termination circuit comprises a lowpass filter connected between the line and the load device or connected between the input device and the line for suppressing the test signal at the load device or suppressing the test signal at the input device, respectively.

**13.** A programmable logic controller system (1) according to claim 12, wherein the test signal injection and extraction circuit of each line comprises:

- a first line impedance circuit connected between the line and a neighbouring line; and
- the line termination circuit comprises a second line impedance circuit connected between the line and the neighbouring line.

**14.** A programmable logic controller system (1) according to claim 13, wherein the first line impedance circuit comprises a highpass filter in series with a line resistor; and the second line impedance circuit comprises a highpass filter in series with a line resistor.

**15.** A programmable logic controller system (1) according to any of claims 7-14, wherein the processor is configured to repeatedly calibrate the line monitoring system by:

- ramping up the level of the test signal on each line until a predetermined power of the line is reached,
- storing the corresponding test voltage level of the test signal as a calibration voltage in non-volatile memory og the processor,
- compute the one or more predetermined score limits based on the calibration voltage.

**16.** A method of determining respective functional states of a plurality of individual lines of a programmable logic controller (PLC) system, said method comprising:

a) inject a test signal onto a first line of the plurality of individual lines (N) at a connection node of the first line, said connection node arranged proximately to a first input channel or a first output channel of the PLC,

b) receive a corresponding test response signal by signal reflection from a line termination circuit arranged distally from the output channel or distally from the input channel of the first line,

c) process a corresponding test response signal in a test signal evaluation path to derive a first evaluation signal ($V_l$) of the first line,

d) determine a functional state of the first line based on the first evaluation signal ($V_l$) of the first line,

e) repeat steps a) to d) for one or more residual lines of the plurality of individual lines to determine their respective functional states.

*FIG. 1*

FIG. 2

FIG. 3

Europäisches
Patentamt

European
Patent Office

Office européen
des brevets

# EUROPEAN SEARCH REPORT

**Application Number**

EP 23 21 2024

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2018/329385 A1 (KOH KIAN KIAT [SG]) 15 November 2018 (2018-11-15) | 1-14,16 | INV. G05B19/05 G05B23/02 |
| A | * paragraphs [0001] - [0007], [0016] - [0024]; claim 1; figure 1 * | 15 | |
| | ----- | | |
| X | US 2023/039029 A1 (ALLEY DANIEL M [US] ET AL) 9 February 2023 (2023-02-09) | 1-14,16 | |
| A | * paragraphs [0012] - [0015], [0029] - [31and42], [0043]; claim 1; figure 3 * | 15 | |
| | ----- | | |
| A | US 2017/220019 A1 (SAKAI YUTAKA [JP]) 3 August 2017 (2017-08-03) * paragraphs [0005], [0006]; claims 1-4; figure 1 * | 1-16 | |
| | ----- | | |

**TECHNICAL FIELDS SEARCHED (IPC)**

G05B

The present search report has been drawn up for all claims

| Place of search | Date of completion of the search | Examiner |
|---|---|---|
| Munich | 8 May 2024 | Juillot, Olivier J. |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

 

& : member of the same patent family, corresponding
    document

EPO FORM 1503 03.82 (P04C01)

**ANNEX TO THE EUROPEAN SEARCH REPORT
ON EUROPEAN PATENT APPLICATION NO.**

EP 23 21 2024

This annex lists the patent family members relating to the patent documents cited in the above-mentioned European search report.
The members are as contained in the European Patent Office EDP file on
The European Patent Office is in no way liable for these particulars which are merely given for the purpose of information.

08-05-2024

| Patent document cited in search report | Publication date | Patent family member(s) | | Publication date |
|---|---|---|---|---|
| US 2018329385 A1 | 15-11-2018 | EP | 3404501 A1 | 21-11-2018 |
| | | US | 2018329385 A1 | 15-11-2018 |
| US 2023039029 A1 | 09-02-2023 | CN | 114124032 A | 01-03-2022 |
| | | EP | 3961228 A1 | 02-03-2022 |
| | | EP | 4254088 A2 | 04-10-2023 |
| | | US | 2022069952 A1 | 03-03-2022 |
| | | US | 2023039029 A1 | 09-02-2023 |
| US 2017220019 A1 | 03-08-2017 | CN | 107024918 A | 08-08-2017 |
| | | DE | 102017000513 A1 | 03-08-2017 |
| | | JP | 6285476 B2 | 28-02-2018 |
| | | JP | 2017134785 A | 03-08-2017 |
| | | US | 2017220019 A1 | 03-08-2017 |

EPO FORM P0459

For more details about this annex : see Official Journal of the European Patent Office, No. 12/82